# EUROPEAN PATENT SPECIFICATION

(11) **EP 4 529 733 B1**
(45) Date of publication and mention of the grant of the patent: **18.11.2026**
(21) Application number: 23727024.4
(22) Date of filing: 22.05.2023
(51) Int. Cl.: H04S 7/00, A63F 13/54, A63F 13/573, G10K 15/02, G10K 15/08

(54) **METHODS, APPARATUS, AND SYSTEMS FOR EARLY REFLECTION ESTIMATION FOR VOXEL-BASED GEOMETRY REPRESENTATION(S)**
VERFAHREN, VORRICHTUNG UND SYSTEME ZUR FRÜHEN REFLEXIONSSCHÄTZUNG FÜR VOXELBASIERTE GEOMETRIEDARSTELLUNG(EN)
PROCÉDÉS, APPAREIL ET SYSTÈMES D'ESTIMATION DE RÉFLEXION PRÉCOCE POUR UNE OU PLUSIEURS REPRÉSENTATIONS GÉOMÉTRIQUES À BASE DE VOXELS

(30) Priority: 23.05.2022 US 202263344895 P; 14.12.2022 US 202263387339 P; 26.04.2023 US 202363462012 P
(43) Date of publication of application: 02.04.2025
(73) Proprietor: Dolby International AB, Dublin, D02 VK60 (IE)
(72) Inventor: SETIAWAN, Panji, San Francisco, California 94103 (US); TERENTIV, Leon, San Francisco, California 94103 (US); FISCHER, Daniel, San Francisco, California 94103 (US); FERSCH, Christof Joseph, San Francisco, California 94103 (US)
(74) Representative: Dolby International AB Patent Group Europe
(86) International application number: PCT/EP2023/063681
(87) International publication number: WO 2023/227544

(56) References cited:
- THOMAS MATTHEW REUBEN: "Wayverb: A Graphical Tool for Hybrid Room Acoustics Simulation", MASTERS THESIS, 31 January 2017 (2017-01-31), pages 1 - 130, XP093069766, Retrieved from the Internet <URL:https://eprints.hud.ac.uk/id/eprint/33919/1/FINAL%20THESIS%20-%20Thomas.pdf>
- LEON TERENTIV ET AL: "Core Experiment on Early Reflections for Voxels", no. m63155, 17 April 2023 (2023-04-17), XP030310206, Retrieved from the Internet <URL:https://dms.mpeg.expert/doc_end_user/documents/142_Antalya/wg11/m63155-v1-m63155.zip m63155 - Core Experiment on Early Reflections for Voxels.docx> [retrieved on 20230417]

## Description

### TECHNICAL FIELD

The present disclosure relates to modelling of audio source(s) and more particular to voxel-based early sound source reflection estimation methods and devices.

### BACKGROUND

Sound reflections of an acoustically reflective surface can influence the perceived sound of an audio source. Sounds that are reflected and received shortly after direct sound at a target location (e.g., a listener position), which herein will be referred to as Early Reflection (ER), are of particular interest when modelling a sound source, as the perceived sound of an audio source can be accurately modelled with only considering direct sound and ERs. Higher order acoustic reflections on the other hand are often less important because they are lower in energy and temporally/spatially psychoacoustically masked by ERs and other components.

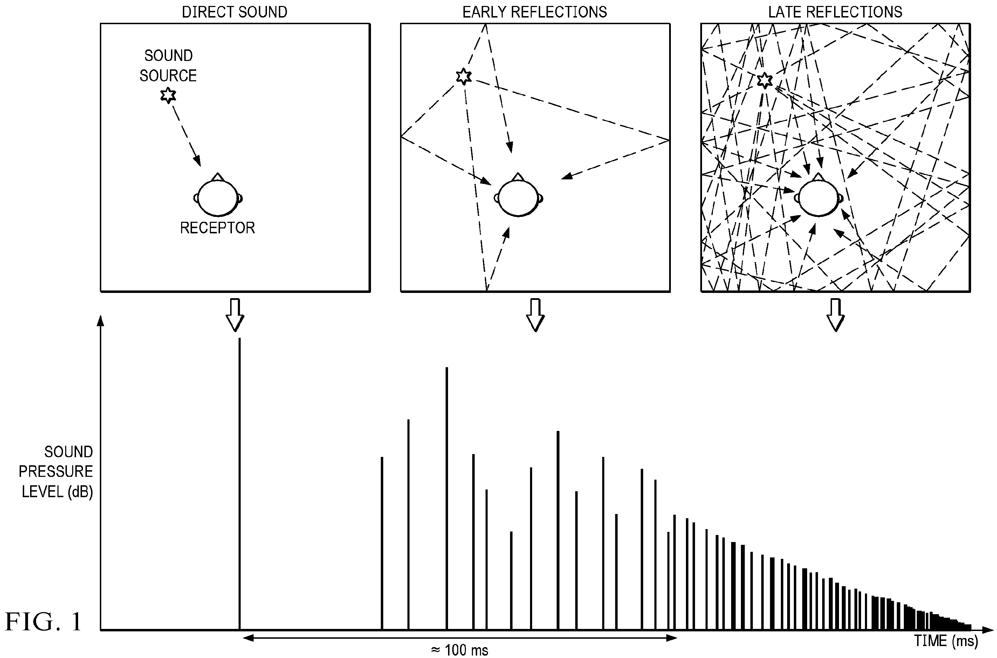

ERs evoke several perceptual effects such as apparent source width, perceived distance, timbre, and spaciousness. ERs are relatively sparse in time and span a relatively short time usually contained within the first ~80ms of a room impulse response (see **Fig. 1).** Figure 1 illustrates an echogram of a room, including the echogram for a direct sound source, early reflections, and late reflections. Figure 1 also allows for visualization as to the differences between direct sound, early reflections and late reflections.

The psychoacoustical relevance of the ER largely depends on several factors such as the direction, level, time delay and spectral content of the audio signal.

The direction of the ERs particularly influences the time delay and frequency response at a listener's ear. Therefore, the directions of ERs play an important role in the perceived reflected sound. When the direction of arrival changes, this implies that there has been a change in the path from the source to the listener's ear due to movement, obstacles, etc.. Changes in the path length influences time delay, and due to the shape of ear pinna, depending on the direction of arrival at the ear, a different frequency response will be produced.

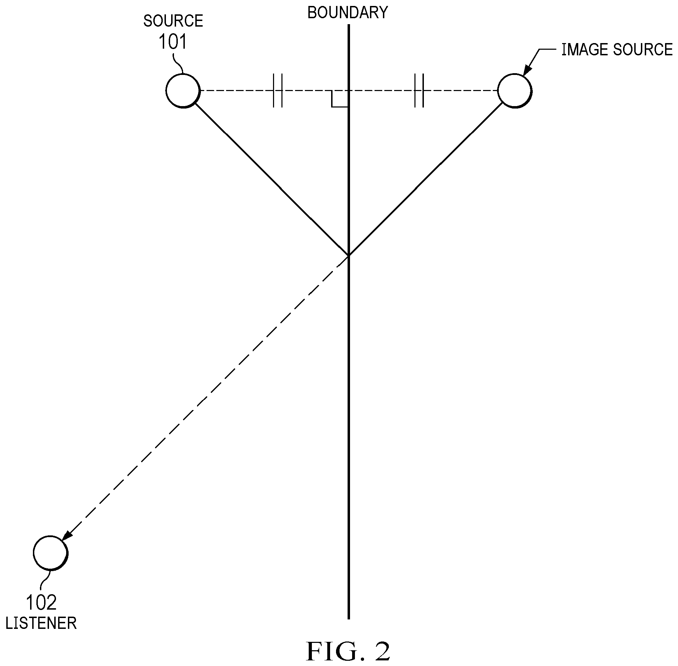

To estimate the trajectories of ERs, the Image-Source (IS) method aims to find the purely specular reflection paths between an audio source and a receiver, i.e., a listener. This process is simplified by assuming that sound propagates only along straight lines, i.e., rays. The audio image source is spawn on a line perpendicular to the boundary and at the same distance from it as the original source 101 (see **Fig. 2).** Figure 2 illustrates a sound source 101, listener 102, a boundary and an image source.

As the sound is reflected of the boundary surface with the same angle as the incident angle the impression is created that the original source 101 is mirrored at the boundary surface. A reflection by a single boundary then represents an (1^{st} order) ER.

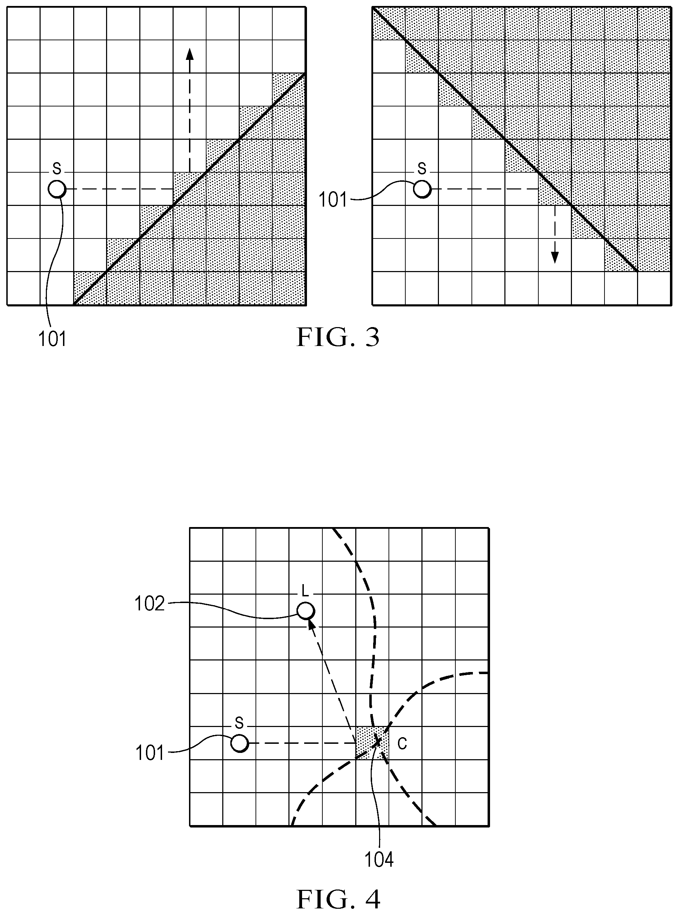

Sometimes, however, the boundaries are unknown or lack definition. One example is a voxel-based representation of the 3D environment used for sound rendering in VR applications. A voxel is a space volume with certain acoustic attributes, e.g., reflectivity. To find boundaries for the IS approach, sets of voxels should be considered, as a single voxel does not have orientation information if the reflecting surface orientation is not explicitly assigned to its properties. Therefore, complex trigonometrical considerations are necessary to estimate the boundaries. An exemplary scenario is depicted in **Fig. 3****.** In this figure grey voxels represent a reflective object and grey voxels next to a white voxel represent the reflective boundary of the surface of the object. Without reflective orientation information, a single voxel is insufficient to determine a reflection trajectory of sound emitted by a source 101.

Thomas Matthew Reuben: "Wayverb: A Graphical Tool for Hybrid Room Acoustics Simulation," 31 January 2017, identifies a hybrid acoustic simulation technique which combines the efficiency of geometric simulation with the accuracy of wave-based modelling.

Thus, there is a need for an improved, efficient, approach to ER estimation in a voxel-based environment, especially when the audio reflecting boundary orientation information is not available in advance.

### SUMMARY

In view of the above, the present disclosure provides methods, apparatus, and programs, as well as computer-readable storage media for early sound source reflections estimation in a voxel-based 3D environment (a 3D voxel grid), having the features of the respective independent claims.

According to an aspect of the disclosure, a method of estimating early reflections according to claim 1 is provided. A voxel-based representation of the three-dimensional audio scene, information on a listener location of a listener in the three-dimensional audio scene, and information on an audio source location of the audio source in the three-dimensional audio scene are obtained (e.g., received or determined). A ray direction pattern is applied to one or more points on a connecting line between the audio source location and the listener location to obtain, for each of the one or more points, a plurality of rays originating at the respective point. A set of collision voxels is determined based on the plurality of rays and the voxel-based representation of the three-dimensional audio scene. Early reflection trajectories are determined based on the set of collision voxels, the listener location, the audio source location and a geometrical validity test. For example, for each collision voxel in the set of collision voxels, a path connecting the listener location and the audio source location via the respective collision voxel may be determined. Then, for each path, the path may be determined as an early reflection trajectory if the path is geometrically valid.

By employing the above-specified heuristic method, early reflections can be efficiently estimated in a voxel-based environment without requiring any reflecting surface orientation information of the voxels. Thereby, a sound source can be modelled with high accuracy and low computational complexity, enabling accurate and efficient sound representation in a real-time application, e.g., VR gaming.

In some embodiments, the method may further include determining the ray direction pattern. Determining the ray direction pattern may include choosing a ray direction pattern from a number (set) of predefined ray direction patterns or calculating the ray direction pattern. Alternatively, the ray direction pattern may be fixed. Further alternatively, an indication of the ray direction pattern to be used may be received with a bitstream.

According to the invention, the method further includes determining the one or more points based on an obtained cardinality of the one or more points. That is, a number of the one or more points may be obtained or determined (e.g., set to be N points) and the resulting (e.g., N) number (count or cardinality) of the one or more points may correspond to coordinates of the one or more points (e.g., in the sense that for each of the one or more points there are respective coordinates).

In some embodiments, the ray direction pattern may be defined as (e.g., may comprise) a predefined number of rays and predefined directions of rays from an origin. The predefined number of rays may be 6, 8, or 12, for example. The directions of rays can be defined by grid indices of the voxel grid.

In some embodiments, the predefined directions of rays may include one or more of: horizontal and vertical directions to neighboring grid indices; and diagonal directions to neighboring grid indices. Therefore, the predefined directions may define relative directions from an origin of the rays, i.e., a grid index (l,m,i) in the voxel grid. The relative directions can be expressed as:
(+1,0,0), (-1,0,0), (0,+1,0), (0,-1,0), (0,0,+1), (-0,0,-1);
(+1,+1,0), (+1,-1,0), (-1,+1,0), (-1,-1,0), (+1,0,+1), (+1,0,-1), (-1,0,+1), (-1,0,-1), (0,+1,+1), (0,+1,-1), (0,-1,+1), (0,-1,-1); and
(+1,+1,+1), (+1,+1,-1), (+1,-1,+1), (+1,-1,-1), (-1,+1,+1), (-1,+1,-1), (-1,-1,+1), (-1,-1,-1).

In some embodiments, determining the ray direction pattern may be based on a scene type of the three-dimensional audio scene, available computational resources, an encoder preset, or a combination thereof.

In some embodiments, coordinates of the one or more points on the line connecting the audio source location and the listener location may be determined based on the number (e.g., count, cardinality) of the one or more points.

In some embodiments, the one or more points may be determined to split the line connecting the audio source location and the listener location into N-1 equal segments, where N is the number (e.g., count, cardinality) of the one or more points. N may be larger than or equal to 2, for example.

In some embodiments, the number of the one or more points may depend on a scene type of the three-dimensional audio scene, available computational resources, an encoder preset, or a combination thereof.

In some embodiments, the scene type may include an indoor scene and an outdoor scene.

In some embodiments, each collision voxel may be an occluder voxel in the voxel-based representation of the three-dimensional audio scene.

In some embodiments, the occluder voxel may represent an acoustically reflective surface.

In some embodiments, the occluder voxel may represent any material in the voxel-based representation of the three-dimensional audio scene other than air. That is, the occluder voxel may represent a reflective surface and a non-occluding voxel may represent a non-reflective surface (or not define a surface at all).

In some embodiments, determining the set of collision voxels based on the plurality of rays and the voxel-based representation of the three-dimensional audio scene may include determining one or more intersections (e.g., intersection points) between each ray of the plurality of rays and the occluder voxels. The method may further include, for each ray, determining an occluder voxel containing an intersection closest to the origin of the respective ray as a collision voxel in the set of collision voxels. That is, the collision voxel may be an occluder voxel first hit by a respective ray.

In some embodiments, determining early reflection trajectories based on the set of collision voxels, the listener location, the audio source location and a geometrical validity test may include determining, for each collision voxel in the set of collision voxels, whether the collision voxel can produce a geometrically valid representation of a first-order reflection. If it was determined that the collision voxel can produce a geometrically valid representation of a first-order reflection, a path connecting the listener location and the audio source location via the respective collision voxel may be determined as an early reflection trajectory.

In some embodiments, determining whether the collision voxel can produce a geometrically valid representation of a first-order reflection may include determining a preceding voxel of the collision voxel. The preceding voxel may be a voxel containing an intersection with the respective ray, preceding the collision voxel in the direction of the respective ray. A second path connecting the listener location and the audio source location via the respective preceding voxel may be determined. The collision voxel can produce a geometrically valid representation of a first-order reflection if the second path does not contain an intersection with an occluder voxel. In general, the collision voxel can produce a geometrically valid representation of a first-order reflection if neither of a path connecting the listener location and the preceding voxel, and a path connecting the audio source location and the preceding voxel contains an intersection with an occluder voxel. In other words, the collision voxel can produce a geometrically valid representation of a first-order reflection if both the path connecting the listener location and the preceding voxel, and the path connecting the audio source location and the preceding voxel pass a line-of-sight check ("visibility check").

Thereby, collision voxels that cannot lead to a geometrically valid path from the audio source location to the listener position can be efficiently sorted out.

Alternatively or additionally, determining early reflection trajectories based on the set of collision voxels, the listener location, the audio source location and a geometrical validity test may include determining, for each collision voxel in the set of collision voxels, a path connecting the listener location and the audio source location via the respective collision voxel. For each path, the path may be determined as an early reflection trajectory if the path is geometrically valid. The path may be said to be geometrically valid if it passes a line-of-sight check ("visibility check"), i.e., if both a path connecting the listener location and the collision voxel and a path connecting the collision voxel and the audio source location pass the line-of-sight check.

In some embodiments, the path may include a straight line connecting the audio source location to a collision voxel in the set of collision voxels and a straight line connecting the same collision voxel in the set of collision voxels to the listener location.

In some embodiments, the path may be determined to be geometrically valid if the path does not contain an intersection with an occluder voxel other than the collision voxel of the respective path. That is, a path with an intersection with more than one occluder voxel may be discarded. In other words, a path may be determined as geometrically valid if it is not obstructed by any occluding voxels other than the collision voxel.

In cases where both the test for a collision voxel that can produce a geometrically valid representation of a first-order reflection and for a geometrically valid path are performed, collision voxels that cannot produce a geometrically valid representation of a first-order reflection may be sorted out first by determining whether there exists an intersection between an occluding voxel and the path connecting the audio source location, the preceding voxel and the listener location. For the remaining collision voxels, the path connecting the audio source position, the collision voxel and the listener position may be determined. Finally, it may be determined whether there exists an intersection between these paths and an occluder voxel other than the collision voxel.

By combining the two geometric validity tests, only geometrically valid early reflection trajectories may be determined, irrespective of the geometry of the three-dimensional audio scene.

In some embodiments, the method may further include selecting a set of acoustically most relevant early reflection trajectories from the early reflection trajectories.

In some embodiments, selecting the set of acoustically most relevant early reflection trajectories may be based on lengths of the early reflection trajectories and/or reflection coefficients of the collision voxel of respective early reflection trajectories. In particular, an acoustically relevant early reflection trajectory may have a short length and/or large reflection coefficient compared to non-acoustically relevant early reflection trajectories, for example.

In some embodiments, the reflection coefficient may depend on a material modelled (or otherwise indicated) by the collision voxel.

In some embodiments, selecting the set of acoustically most relevant early reflection trajectories may include discarding early reflection trajectories with a value indicative of an inner angle close to 180° at the collision voxel. Here, close to 180° may mean 180°-ε, where ε is a small angle. In some implementations, early reflection trajectories with said value indicating an inner angle of more than 160° may be discarded, for example.

In some embodiments, the value indicative of an inner angle close to 180° may be the inner angle or a length of the early reflection trajectory.

According to the invention, the method further includes outputting the early reflection trajectories.

That is, the early reflection trajectories or the acoustically most relevant early reflection trajectories are output for rendering or further processing, such as occlusion, diffraction, 3D extent or reverb processing prior to the rendering, for example.

In some embodiments, the method may further include the rendering of the three-dimensional audio scene, for example by a Virtual reality, VR, augmented reality, AR, mixed reality, MR, and/or extended reality, XR, device.

In some embodiments, the early reflection trajectories may represent 1^{st} order trajectories. In some embodiments, the 1^{st} order trajectories may be reflection trajectories with a single reflection between the audio source location and the listener location.

Aspects of the present disclosure may be implemented via an apparatus. The apparatus may include a processor and memory coupled to the processor. The processor may be adapted carry out the method according to aspects and embodiments of the present disclosure.

Aspects of the present disclosure may be implemented via a program. When instructions of the program are executed by a processor, the processor may carry out aspects and embodiments of the present disclosure. A computer-readable storage medium may store the program. Such computer-readable storage media may include memory devices such as those described herein, including but not limited to random access memory (RAM) devices, read-only memory (ROM) devices, etc.. Accordingly, some innovative aspects of the subject matter described in this disclosure can be implemented via one or more computer-readable storage media having software stored thereon.

It will be appreciated that apparatus features and method steps may be interchanged in many ways. In particular, the details of the disclosed method(s) can be realized by the corresponding apparatus (or system), and vice versa, as the skilled person will appreciate. Moreover, any of the above statements made with respect to the method(s) are understood to likewise apply to the corresponding apparatus (or system), and vice versa.

### BRIEF DESCRIPTION OF DRAWINGS

Example embodiments of the disclosure are explained below with reference to the accompanying drawings, wherein
**Fig. 1** is a diagram showing an example of an echogram of a room,
**Fig. 2** schematically illustrates an example of determining ERs with the IS method,
**Fig. 3** schematically illustrates a voxel grid, an audio source, and the associated reflecting boundary,
**Fig. 4** schematically illustrates a voxel grid, an audio source, a listener, and a single collision voxel considered for reflection trajectory estimation,
**Figs. 5A** to **5D** schematically illustrate examples of ray direction patterns according to embodiments of the disclosure,
**Figs. 6A to 6B** schematically illustrate examples of determining whether a collision voxel can produce a geometrically valid representation of a first-order reflection according to embodiments of the disclosure,
**Fig. 7** schematically illustrates an example 2D audio scene with occluding voxels (dotted), non-occluding voxels (plain), an audio source, and a listener according to embodiments of the disclosure,
**Fig. 8** schematically illustrates the example 2D audio scene of **Fig. 7** and a ray direction pattern applied to the audio source location and collision voxels hit by the rays according to embodiments of the disclosure,
**Fig. 9** schematically illustrates the example 2D audio scene of **Fig. 8** and lines connecting the audio source to the listener via the collision voxels according to embodiments of the disclosure,
**Fig. 10** schematically illustrates the example 2D audio scene of **Fig. 9** and a geometrically valid ER trajectory according to embodiments of the disclosure,
**Fig. 11** schematically illustrates the example 2D audio scene of **Fig. 7** and all geometrically valid ER trajectories according to embodiments of the disclosure,
**Figs.** schematically illustrate the example 2D audio scene of **Fig. 7** with different listener locations and all associated geometrically valid ER trajectories according to embodiments of the disclosure,
**Fig. 13** schematically illustrates an enlarged view of an example 2D audio scene with a geometrically valid ER trajectory with an inner angle close to 180° according to embodiments of the disclosure,
**Fig. 14** is a flowchart illustrating an example of a method of estimating ER trajectories in a voxel-based audio scene representation according to embodiments of the disclosure,
**Fig. 15** is a flowchart illustrating an example of a method of determining a set of collision voxels based on the plurality of rays and the voxel-based representation of the audio scene according to embodiments of the disclosure,
**Fig. 16** is a flowchart illustrating an example of a method of determining early reflection trajectories based on the set of collision voxels, the listener location, the audio source location, and a geometrical validity test according to embodiments of the disclosure,
**Fig. 17** is a flowchart illustrating another example of a method of determining early reflection trajectories based on the set of collision voxels, the listener location, the audio source location, and a geometrical validity test according to embodiments of the disclosure, and
**Fig. 18** schematically illustrates an example of an apparatus for ER trajectories estimation according to embodiments of the disclosure.

### DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

The Moving Picture Experts Group (MPEG) is an alliance of working groups established jointly by the International Organization for Standardization (ISO) and International Electrotechnical Commission (IEC), that sets standards for media coding, including audio coding. MPEG is organized under ISO/IEC SC 29, and the audio group is presently identified as working group (WG) 6. WG 6 is currently working on the MPEG-I Audio standard.

The new MPEG-I standard enables an acoustic experience from different viewpoints and/or perspectives or listening positions by supporting scenes and various movements around such scenes, such as movements using various degrees of freedom in Virtual reality (VR), augmented reality (AR), mixed reality (MR) and/or extended reality (XR) applications.

For audio rendering in VR, AR, MR and XR applications, object-based approaches have been widely employed by representing a complex auditory scene as multiple separate audio objects, each of which is associated with parameters or metadata defining a location/position and trajectory of that object in the scene. Alternatively, audio rendering in such environments may also use higher order Ambisonics (HOA).

Voxels for audio rendering are relevant for media environments implemented in both hardware and software, such as video game and/or VR, AR, MR and XR environments. The following describe and define some concepts relating to voxels for audio rendering:

### What is voxel for audio rendering?

A Voxel is a space volume with acoustic properties or audio rendering instructions assigned to it.

### What is voxel size for audio rendering?

Voxel size is encoder configuration parameter, and it can be (manually or automatically) selected according to a scene geometry level of details (e.g., in the range of 10 cm - 1 m).

### How voxels can be obtained?

Voxels for audio rendering can be obtained by:
- voxelization (or conversion) of a mesh-based scene representation, and/or
- from scene representation used for scene generation (or even video rendering) (e.g., by down-sampling of voxels of smaller size).

### How to represent voxel-based audio scenes?

Any voxel-based representation of an audio scene may contain an indication of voxels that are not transmission voxels (e.g., that are occluder voxels), i.e., voxels in which sound cannot propagate or cannot freely propagate - a representation of occluding geometries. This indication may relate to an indication of coordinates (e.g., center coordinates, corner coordinates) of the respective voxels. The coordinates of these voxels may be represented by grid indices, for example. Additionally, the voxel-based representation may include indications of material properties of the voxels that are not transmission voxels, such as absorption coefficients, reflection coefficients, etc.. In addition to the occluder voxels, the voxel-based representation may also indicate transmission voxels (e.g., air voxels), i.e., voxels in which sound can propagate a representation of sound propagation media. Accordingly, some implementations of voxel-based representations of audio scenes may include, for each voxel in a predefined section of space (e.g., within boundaries enclosing the audio scene), and indication of a respective material property.

However, existing conventional approaches for providing realistic sound for user experiences (including those involving movement) in VR, AR, MR and XR environments using voxels are challenging and computationally complex. Estimating ER trajectories is of particular interest for these use-cases. The psychoacoustical relevance of the ER directions is higher for the VR use-cases than the ER audio signal level, because VR users can see reflecting surfaces better than estimating their reflective properties (because, for example, reflective properties shall give an estimate of the reflected energy or audio signal level).

In conventional approaches for estimation ER trajectories (e.g., the IS approach), the boundary for determining the reflections must be known (and clearly defined). Since a single voxel does not provide enough information about the reflecting surface boundary orientation, a method of the present invention relies on a heuristic approach to estimate the ER trajectories to generate the perceived 1^{st} order ER sound effect with sufficient accuracy or sufficiently faithful.

The heuristic approach according to the present disclosure is based on finding geometrically valid reflection trajectories between audio source and listener sufficient for generating the perceived 1^{st} order ER sound effect by performing several low complexity steps based on the location of audio source and listener, and the voxel-based geometry representation.

**Fig. 4** depicts the general idea of the heuristic approach. A position of an audio source 101 and a position of a listener 102 are known. Then, valid reflections trajectories from the audio source 101 to the listener 102 over a collision voxel 104 should be estimated without considering information of a reflective surface based on multiples of voxels, i.e., the heuristic approach works on a voxel-by-voxel basis and on grid indices representing the voxel positions.

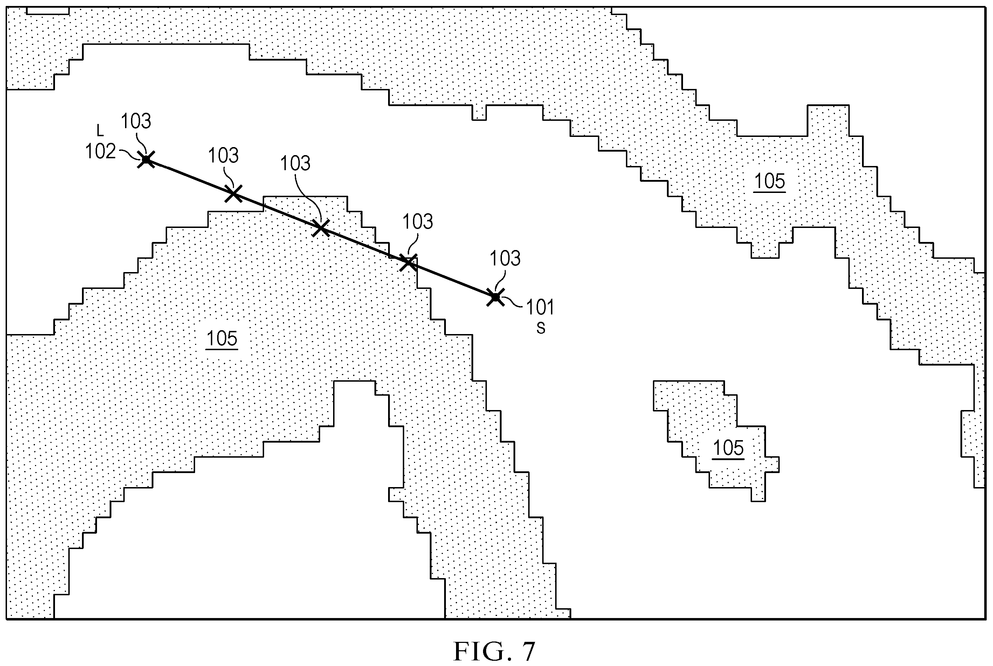

The heuristic approach will now be explained in detail for a specific audio scene example depicted in **Figs. 7** to **11****.** The disclosure should however not be construed as to be limited by this specific example. Moreover, while the example relates to a 2D case or shows a 2D projection only, it is understood that the approach according to the present disclosure is generally applicable to 3D audio scenes. **Fig. 7** depicts an example 2D audio scene with occluding voxels (105 dotted), non-occluding voxels (plain), audio source 101, and listener 102. The locations of the audio source 101 and listener 102 are marked with S and L, respectively. The example is in 2D for illustration purposes only. The extension of the algorithm to a 3D environment is straightforward.

The voxel-based representation of the audio scene, information on the listener location, and the audio source 101 location are an input to the ER trajectory estimation method. In other words, the voxel-based representation of the audio scene, information on the listener location, and the audio source location may be received. Alternatively, the voxel-based representation of the audio scene, information on the listener location, and the audio source location may be determined in the ER trajectory estimation method.

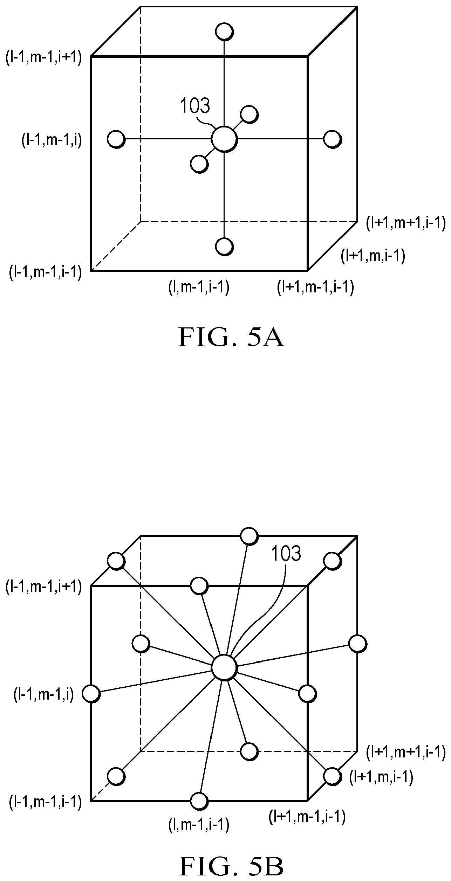

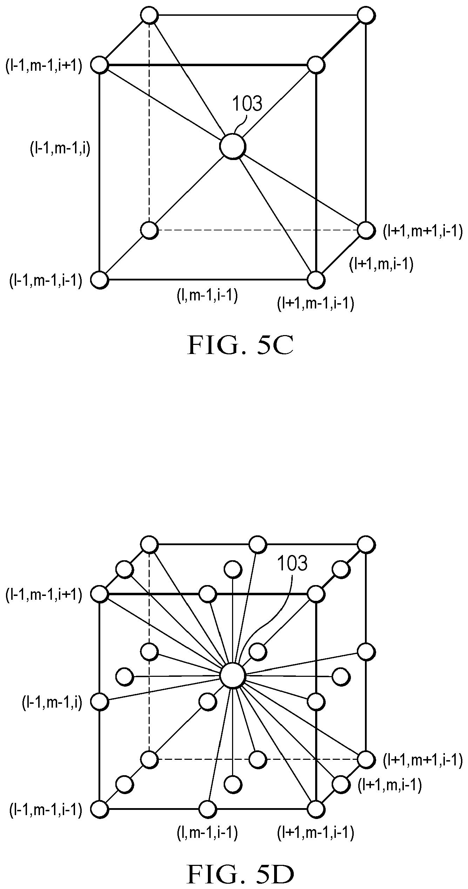

To find reflection trajectories between the audio source 101 and the listener 102, a ray direction pattern is applied to points 103 in the audio scene. In the example of Fig. 7 five equally spaced points on the line connecting the audio source 101 and the listener 102 are depicted. The depicted example, however, should not be construed to limit the positioning and number of the points. A different number of points and different positions of these points can be employed for the method. The ray direction pattern may be determined beforehand. Further, the ray direction pattern may define a predefined number of rays and predefined (corresponding) directions of rays from an origin. Example ray direction patterns are depicted in **Figs. 5A** to **5D****.** Accordingly, the predefined number of rays may be 6 **(****Fig. 5A****)),** 8 **(****Fig. 5C****)),** or 12 **(****Fig. 5B****))** or a combination thereof **(****Fig. 5D****)),** for example, and the predefined directions of rays may comprise directions from a ray origin (l,m,i) in the voxel grid. The ray origin in the audio scene may be point 103. The directions may be any combination of the following directions with respect to the ray origin: horizontal and vertical directions to neighboring grid indices; and diagonal directions to neighboring grid indices. The relative directions can be expressed as: (+1,0,0), (-1,0,0), (0,+1,0), (0,-1,0), (0,0,+1), (-0,0,-1); (+1,+1,0), (+1,-1,0), (-1,+1,0), (-1,-1,0), (+1,0,+1), (+1,0,-1), (-1,0,+1), (-1,0,-1), (0,+1,+1), (0,+1,-1), (0,-1,+1), (0,-1,-1); and (+1,+1,+1), (+1,+1,-1), (+1,-1,+1), (+1,-1,-1), (-1,+1,+1), (-1,+1,-1), (-1,-1,+1), (-1,-1,-1).

Determining the ray direction pattern may be understood as choosing one of the predefined ray patterns. Determining the ray direction pattern may be based on a scene type of the audio scene, available computational resources, an encoder preset, or a combination thereof. The scene type may comprise an indoor scene and an outdoor scene, for example.

In a next step, coordinates of points need to be defined (e.g., determined or calculated) for application of the ray direction pattern to the respective points 103. The number (e.g., count, cardinality) of points may be determined. The number of the one or more points may depend on a scene type of the audio scene, available computational resources, an encoder preset, or a combination thereof. The scene type may comprise an indoor scene and an outdoor scene, for example. Alternatively, the number of points may be fixed. In some implementations, the number of points may alternatively or additionally depend on the chosen ray direction pattern.

Further, it has been found that locating the points on a line between the audio source 101 and the listener 102 improves the quality and efficiency of ER trajectory estimation. To this end, the points 103 (location of the points 103) may be determined based on the number of the one or more points. Additionally, the location of the points may be determined based on the line connecting the audio source location and the listener location (e.g., to be arranged on said line). More particularly, the one or more points 103 may be determined such that the line connecting the audio source location and the listener location is split into N-1 equal segments, for example. Here, N is the number of the one or more points and may be larger than or equal to 2 in this case.

Notably, for the number of points being chosen as 1, the single point may correspond to the audio source location. For the number of points chosen as 2, the two points may correspond to the audio source location and the listener location, respectively.

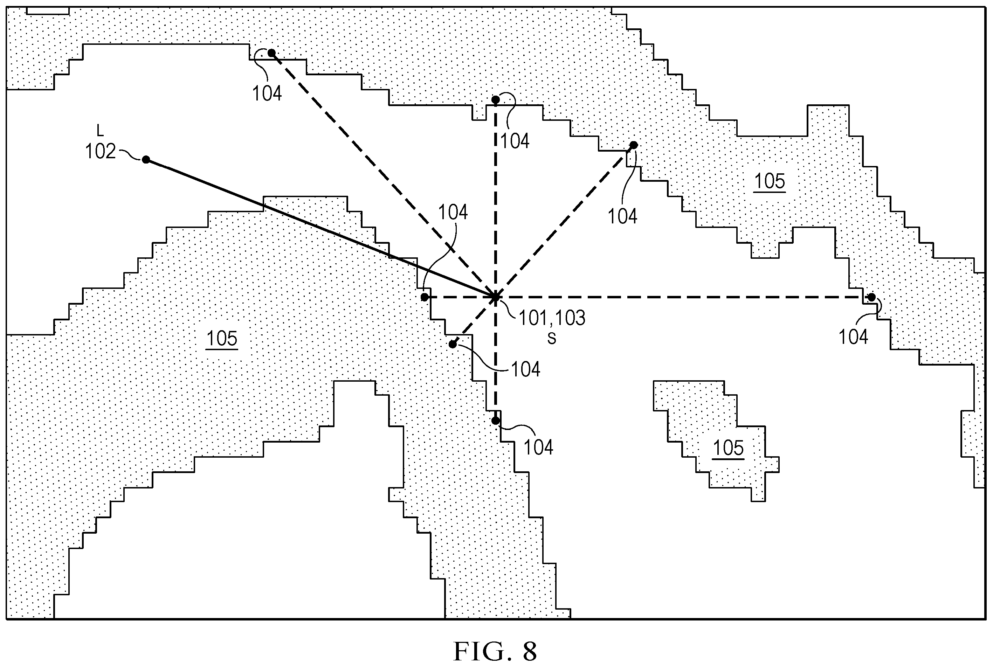

**Fig. 8** depicts an example where a ray direction pattern with 8 rays is applied to a point 103 located at the location of the audio source 101. The rays are depicted as dashed lines.

In a next step, a set of collision voxels is determined based on the plurality of rays and the voxel-based representation of the audio scene. In particular, the set of collision voxels may be determined by searching for intersections between the rays and any occluder voxel 105 (dotted) in the audio scene. Occluder voxels 105 may represent an acoustically reflective surface. In other words, occluder voxels 105 may represent any material in the voxel-based representation of the audio scene other than air or other representations of sound propagation media. Then, for each ray, an occluder voxel 105 containing an intersection closest to the origin of the respective ray may be determined as a collision voxel 104. In other words, a collision voxel 104 may be defined as the first occluding voxel hit by the respective ray. This step ensures that only occluding voxels are selected which may represent a reflective surface. In **Fig. 8** all collision voxels 104 for the rays originating at the audio source location are marked with a bullet point at the end of the rays. Notably, in this example the lower right ray has no intersection with any occluding voxels and therefore is not depicted in **Fig. 8** and not further considered in the algorithm.

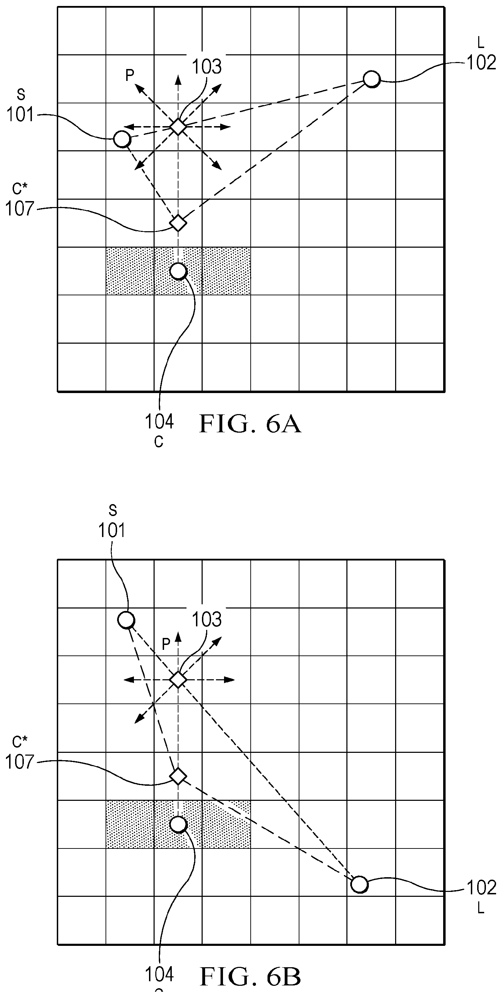

In a next step, it may be determined whether the collision voxels 104 can produce a geometrically valid representation of a first-order reflection. In **Fig. 6A** a scenario is depicted where the collision voxel can produce a geometrically valid representation of a first-order reflection. For the collision voxel 104 a preceding voxel 107 may be determined. The preceding voxel 107 may be a voxel preceding the collision voxel 104 in the direction of the respective ray. For the preceding voxel 107, a path connecting the audio source location and the listener location via the preceding voxel 107 may be determined. If the path does not contain an intersection with an occluding voxel (i.e., passes a line-of-sight or visibility check), the collision voxel 104 is determined as a collision voxel that can produce a geometrically valid representation of a first-order reflection. In the case of **Fig. 6A** the path does not contain an intersection with an occluding voxel. A scenario for a collision voxel 104, which cannot produce a geometrically valid representation of a first-order reflection, is depicted in **Fig. 6B****.** In this example, the line connection the preceding voxel and the listener position intersects the occluding voxel to the right of the collision voxel 104. Collision voxels 104 which cannot produce a geometrically valid representation of a first-order reflection may be discarded.

In a next step, for each collision voxel 104 determined for a ray and originating point 103, a path may be determined to connect the audio source 101 and the listener 102 via the respective collision voxel 104. The path may comprise a straight line connecting the audio source location to the collision voxel 104 and a straight line connecting the same collision voxel 104 to the listener location. Alternatively, a path may comprise a straight line connecting the audio source location to the preceding voxel 107 and a straight line connecting the preceding voxel 107 to the listener location, or a path derived from the two possible paths mentioned above.

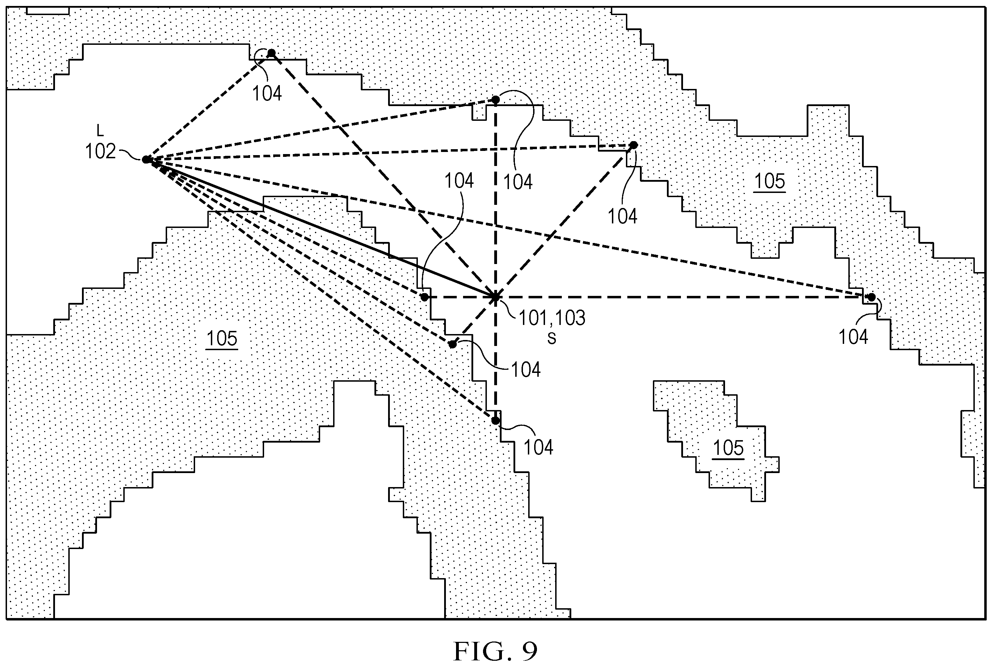

**Fig. 9** shows the example depicted in **Fig. 8** with the determined paths between audio source 101 and listener 102.

In a final step, which may be optional, it is determined whether the paths from audio source 101 to listener 102 are geometrically valid. This step may be combined with the previous selection of collision voxels 104 that can produce a geometrically valid representation of a first-order reflection. Then, only the paths relating to a collision voxel that can produce a geometrically valid representation of a first-order reflection may be considered in the following geometric validity test. Alternately, the following geometric validity test may consider the paths relating to all collision voxels 104. As the paths determined in the previous step may be solely defined by straight lines between audio source 101, collision voxel 104, and listener 102, lines may traverse (e.g., intersect or graze) occluding voxels other than the collision voxel 104. In reality, such a reflection trajectory would not be possible in the sense that it would not permit propagation of sound. Therefore, paths comprising lines traversing occluding voxels other than the respective collision voxel 104 may be determined to be geometrically invalid. To find intersections with occluding voxels other than the respective collision voxel 104, a line-grid intersection algorithm may be applied to the lines connecting audio source 101, collision voxel 104, and listener 102. As an example, the Fast traversal algorithm for ray tracing (cf. Amanatides, J. and A. Woo, A Fast Voxel Traversal Algorithm for Ray Tracing. Proceedings of EuroGraphics, 1987. 87.) may be used.

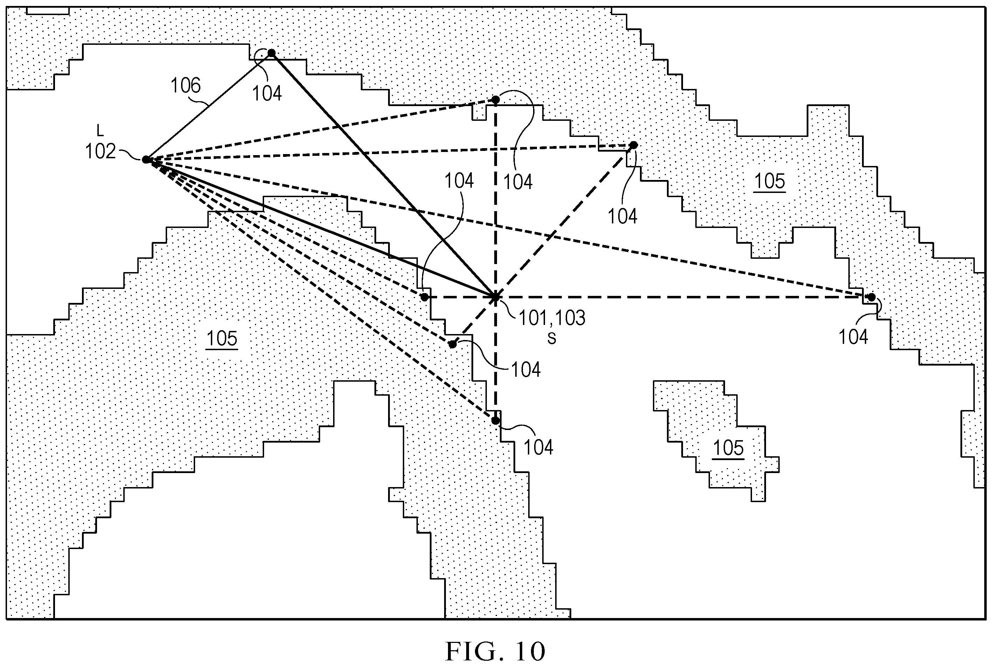

**Fig. 10** depicts the determined geometrically valid path as a solid line. Notably, only one path of the previously found 7 paths is determined as geometrically valid in this example.

As previously stated, the process is repeated for each point 103 on the line between audio source 101 and listener 102.

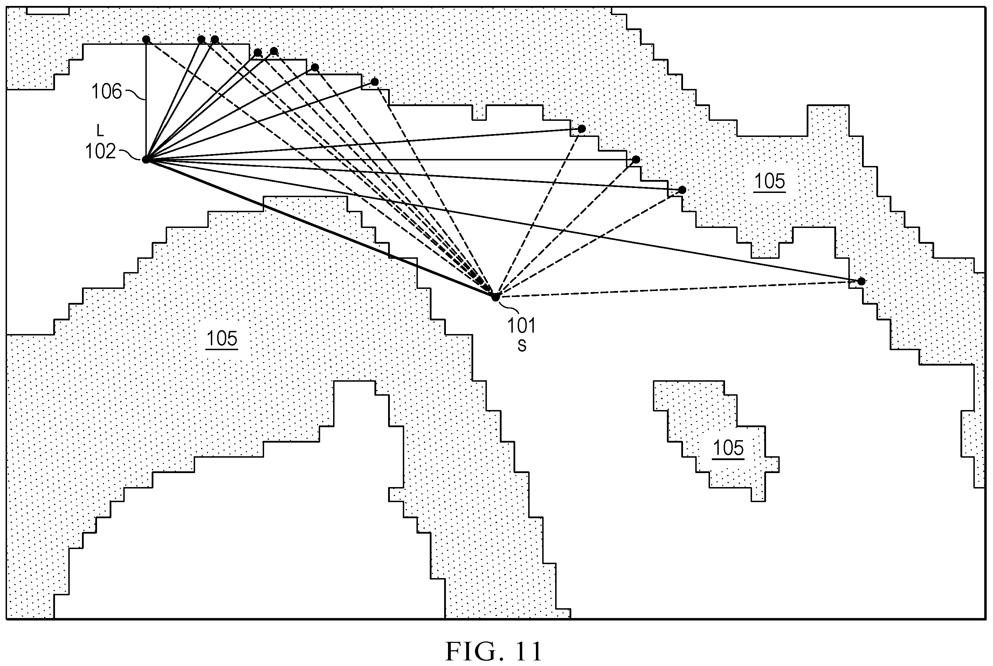

**Fig. 11** depicts the final result of the algorithm for the example of *N* = 7 points 103 and 8 rays per point 103. From the 7 * 8 = 56 possible paths, only 11 are determined as geometrically valid. These paths may then be considered as ER trajectories 106.

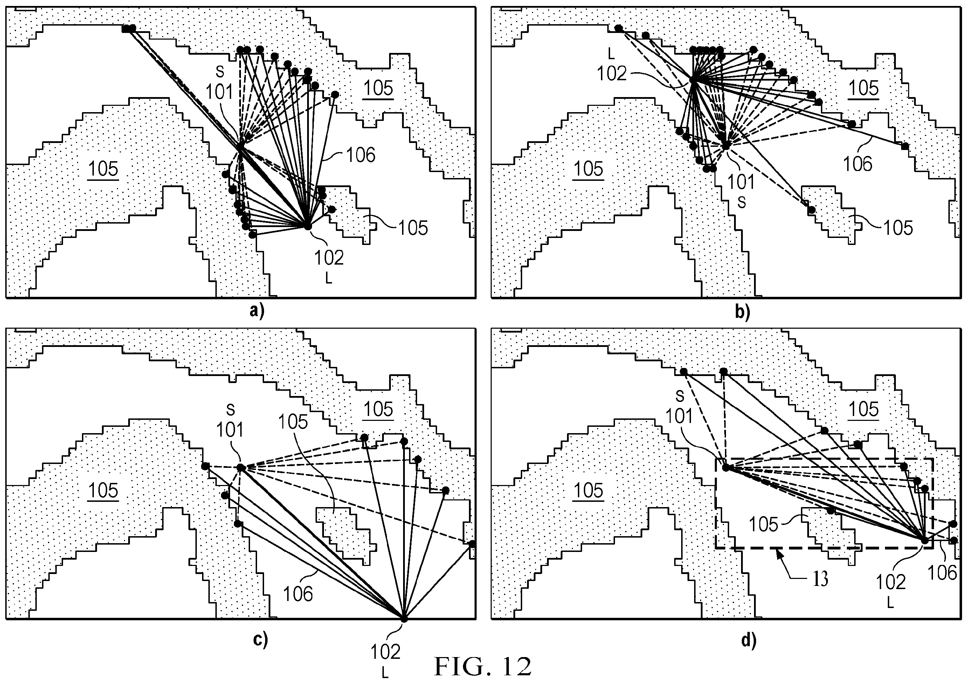

**Figs. 12 a) to d)** show the results of the algorithm for the previous audio scene with different listener locations and *N* = 7.

Optionally, the resulting ER trajectories 106 can be output for further processing, such as rendering the audio scene, for example. Alternatively, the determined ER trajectories 106 may be further analyzed for improved audio scene rendering.

For example, a set of (one or more) acoustically most relevant ER trajectories from the ER trajectories 106 may be selected. The selection may be based on lengths of the ER trajectories 106 and/or reflection coefficients of the collision voxels 104 of the ER trajectories 106. The reflection coefficient may depend on a material modelled by the respective collision voxel 104. For example, ER trajectories with very large path length (e.g., larger than a certain threshold or larger than a certain fraction or multiple of the length of the connecting line between the audio source and the listener) may be discarded. Alternatively or additionally, ER trajectories with small reflection coefficient (e.g., smaller than a certain threshold) may be discarded.

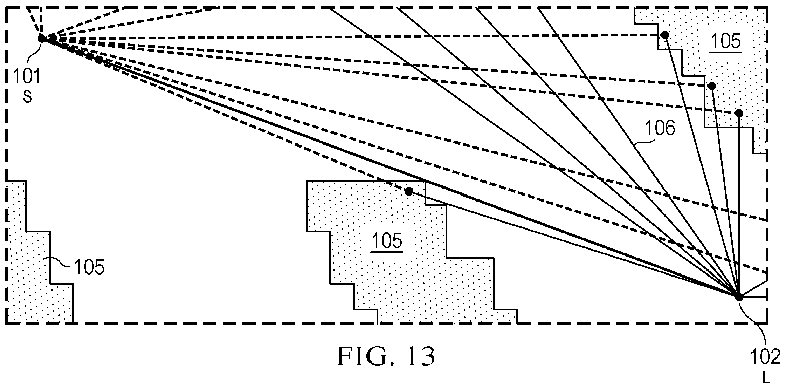

Alternatively or additionally, ER trajectories 106 with a value indicative of a large inner angle at the collision voxel 104 may be discarded. A large angle may be defined as an inner angle close to 180°, for example 180°-ε where ε is a small angle. Alternatively, a large angle in this context may be an inner angle larger than 160°. The value indicative of the inner angle may be the inner angle itself or a length of the ER trajectory 106 (noting that large inner angle implies a comparatively short path length, whereas a small inner angle implies a relatively long path length). **Fig. 13** depicts an example of a geometrically valid ER trajectory 106 with an inner angle close to 180°. As a result, the length of the path is very close to the direct path between audio source 101 and listener 102. Therefore, the ER will be masked by direct sound (i.e., sound without reflection) received from the audio source 101. The ER may therefore be determined to be psychoacoustically invalid/irrelevant. As a consequence, such an ER may be discarded.

In another example, two or more determined ER trajectories may be averaged (e.g., spatially averaged). To do so, respective image sources may be determined for the two or more ER trajectories, and the determined image sources may be spatially averaged to obtain an averaged image source. Further, associated gains for the image sources may be determined (e.g., based on reflection coefficients and/or path lengths) and a gain for the averaged image source may be obtained by averaging the individual gains.

By the above disclosed method, ER directions can be acquired in an efficient manner, while still enabling an accurate (e.g., faithful or at least realistic) representation of the ER effect during sound rendering.

The above disclosed method may be used on a frame-by-frame basis for audio processing of a three-dimensional audio scene. Alternatively, sub-divisions of time (time units) other than frames may be used here. The proposed method is independent of the type of time units that are considered.

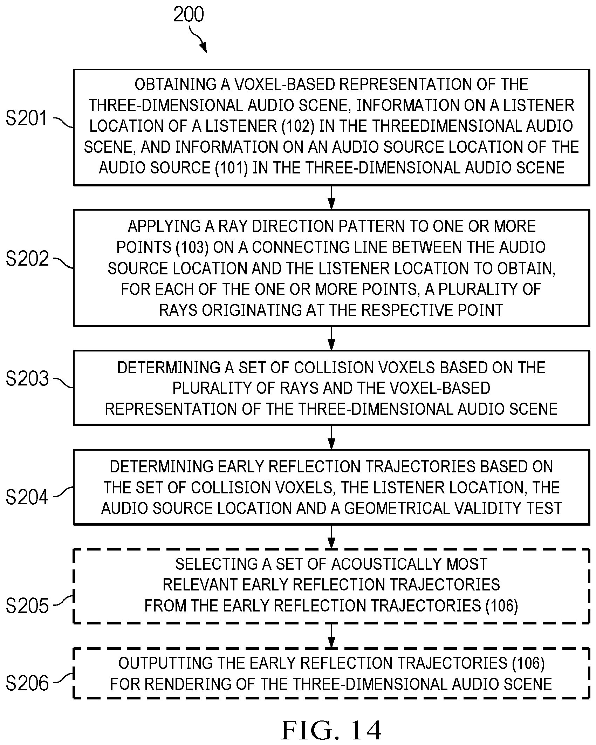

Reflection trajectories for a given frame may be estimated based on the method according to the above disclosed method. The estimated early reflection trajectories and the coordinates of the listener location and audio source location may be stored. The estimated early reflection trajectories may also comprise the respective gains of the audio image source. In general, the estimated early reflection trajectories may relate to an indication of an image source location and/or an indication of an image source gain. Alternatively, estimated early reflection trajectories of a previous frame may be accessed. In particular, stored coordinates and gains of the audio image sources of the previous frame may be accessed. Estimated early reflection trajectories of a previous frame may also be estimated based on the above disclosed method. Estimated early reflection trajectories of a previous frame may be accessed only if a voxel containing the listener location, a voxel containing the audio source location, and a geometry of the voxel-based representation of the three-dimensional audio scene did not change between the frame and the previous frame. The voxel containing the listener location may be represented by listener head position voxel indices. The voxel containing the audio source location may be represented by audio point source position voxel indices. The geometry of the voxel-based representation of the three-dimensional audio scene may be represented by a 3D voxel matrix (e.g., associated with reflection coefficients). In line with the above, a method 200 is provided for estimation of ER trajectories as depicted in the flowchart of **Fig. 14****.** The method may be implemented in a decoder or renderer or in both decoder and renderer in an AR/VR/MR/XR environment. The decoder and/or renderer may be implemented in the network/cloud or a processing device such as a mobile device and an AR/VR/MR/XR google/lens or distributed in both the network/cloud and a processing device. In addition to the following method steps, method 200 may optionally include all variations described above with respect to the aforementioned ER estimation algorithm discussed in connection with **Fig. 7** to **Fig. 13****.**

In step S201, a voxel-based representation of the three-dimensional audio scene, information on a listener location of a listener 102 in the three-dimensional audio scene, and information on an audio source location of the audio source 101 in the three-dimensional audio scene are obtained. The voxel-based representation, information on the listener location, and information on the audio source location may be each received and/or predetermined (i.e., previously calculated, stored, and then read from memory).

In step S202, a ray direction pattern is applied to one or more points 103 on a connecting line between the audio source location and the listener location to obtain, for each of the one or more points 103, a plurality of rays originating at the respective point(s) 103. The ray direction pattern may be received and/or predetermined. Alternatively, the ray direction pattern may be determined in the context of the proposed method. Determining the ray direction pattern may be understood as choosing one of a set of predefined ray patterns, for example. Determining the ray direction pattern may be based on a scene type of the audio scene, available computational resources, an encoder preset, or a combination thereof. The scene type may comprise an indoor scene and/or an outdoor scene, for example. In some embodiments, a scene type can be fully indoor, fully outdoor, or a combination of both indoor and outdoor.

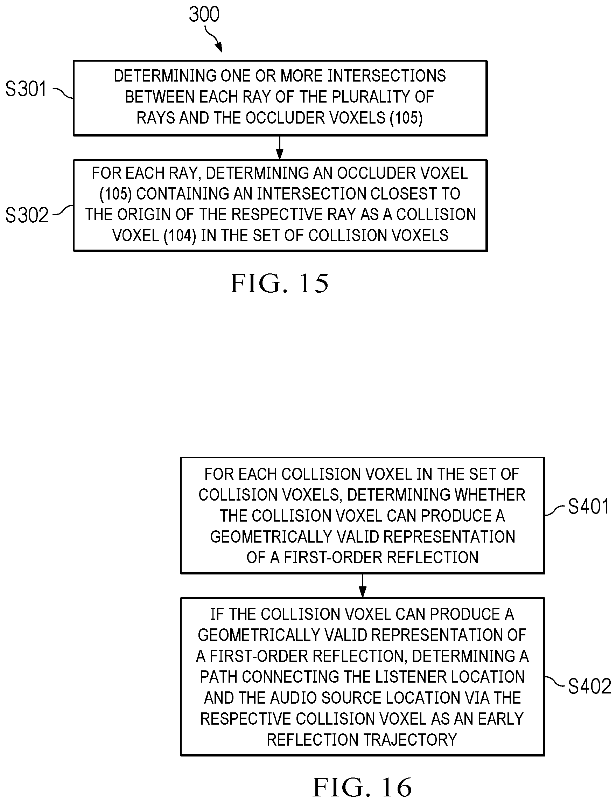

In step S203, a set of collision voxels is determined based on the plurality of rays determined at step S202 and the voxel-based representation of the three-dimensional audio scene. The set of collision voxels may be determined in accordance with the method described in connection with **Fig. 15****.**

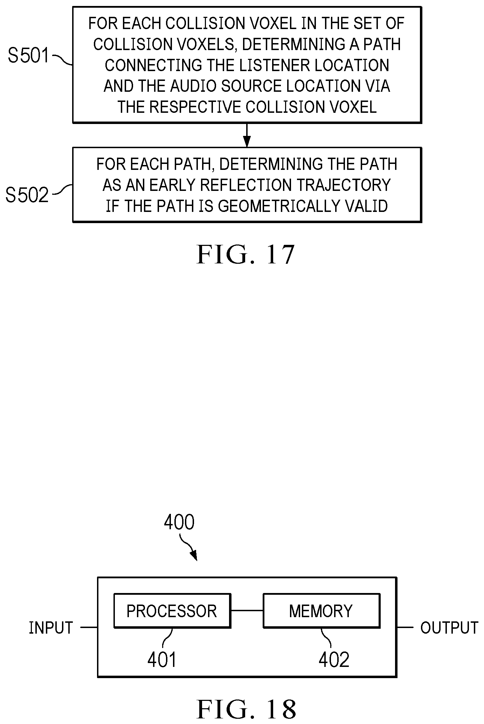

In step S204, early reflection trajectories are determined based on the set of collision voxels, the listener location, the audio source location, and a geometrical validity test. The early reflection trajectories may be determined in accordance with the method described in connection with **Fig. 16** and/or **Fig. 17****.**

In optional step S205, a set of acoustically most relevant early reflection trajectories is selected from the ER trajectories 106. This selection may imply discarding at least one of the ER trajectories 106.

In optional step S206, the ER trajectories 106 are output for rendering of the three-dimensional audio scene. The ER trajectories 106 may be the ER trajectories of step S205 or step S206.

**Fig. 15** shows a method 300 for determining the set of collision voxels. Method 300 may implement step S203, for example.

In step 301, one or more intersections between each ray of the plurality of rays and the occluder voxels 105 are determined.

In step 302, for each ray, an occluder voxel 105 containing an intersection closest to the origin of the respective ray is determined as a collision voxel 104. The collision voxels 104 determined in this manner form the set of collision voxels.

**Fig. 16** shows a method 400 for determining the early reflection trajectories. Method 400 may implement step S204, for example.

In step 401, for each collision voxel in the set of collision voxels, it is determined whether the collision voxel can produce a geometrically valid representation of a first-order reflection.

In step 402, if the collision voxel can produce a geometrically valid representation of a first-order reflection, a path connecting the listener location and the audio source location via the respective collision voxel is determined as an early reflection trajectory.

**Fig. 17** shows a method 500 for determining the early reflection trajectories. Method 500 may implement step S204, for example.

In step 501, for each collision voxel in the set of collision voxels, a path connecting the listener location and the audio source location via the respective collision voxel 104 is determined. The path may comprise two straight line segments, as described above. In other words, the audio source 101 and the listener 102 may be connected, via a collision voxel 104, by straight lines.

In step 502, for each path, determined at step S501, that respective path is determined to be an ER trajectory 106 if the path is geometrically valid. A path may be judged to be geometrically valid if it is not obstructed by occluding voxels other than the respective collision voxel.

While a method of estimating ER trajectories has been described above, the disclosure likewise relates to corresponding apparatus, and the like. An embodiment providing such apparatus will be described next with reference to **Fig. 18****.**

As shown in **Fig. 18****,** the apparatus 400 includes a processor 401 and memory 402. The memory 402 is configured to store program code. The processor 401 is configured to run instructions in the program code, so that the apparatus 400 performs the ER trajectory estimation methods in any one of the above embodiments and implementations. The processor 401 may also receive, among others, suitable input data (e.g., voxel grid, voxel data, audio source and listener location, etc.), depending on use cases and/or implementations. The processor 401 may be adapted to carry out the methods/techniques (e.g., methods 200,300, 400 and 500 as illustrated above with reference to **Figs. 14** to **17****,** respectively) described throughout the present disclosure and to generate corresponding output data (e.g., ER trajectories, etc.), depending on use cases and/or implementations. The apparatus may be part of a Virtual reality (VR), augmented reality (AR), mixed reality (MR), and/or extended reality (XR) device. Further, the apparatus may relate to a decoder device (decoder-side device), or rendering device, for example in the context of a VR/AR/MR/XR environment.

Aspects of the systems described herein may be implemented in an appropriate computer-based sound processing network environment for processing digital or digitized audio files. Portions of the adaptive audio system may include one or more networks that comprise any desired number of individual machines, including one or more routers (not shown) that serve to buffer and route the data transmitted among the computers. Such a network may be built on various different network protocols, and may be the Internet, a Wide Area Network (WAN), a Local Area Network (LAN), or any combination thereof.

One or more of the components, blocks, processes or other functional components may be implemented through a computer program that controls execution of a processor-based computing device of the system. It should also be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), non-volatile storage media in various forms, such as optical, magnetic or semiconductor storage media.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

### Interpretation

A computing device implementing the techniques described above can have the following example architecture. Other architectures are possible, including architectures with more or fewer components. In some implementations, the example architecture includes one or more processors (e.g., dual-core Intel^{®} Xeon^{®} Processors), one or more output devices (e.g., LCD), one or more network interfaces, one or more input devices (e.g., mouse, keyboard, touch-sensitive display) and one or more computer-readable mediums (e.g., RAM, ROM, SDRAM, hard disk, optical disk, flash memory, etc.). These components can exchange communications and data over one or more communication channels (e.g., buses), which can utilize various hardware and software for facilitating the transfer of data and control signals between components.

The term "computer-readable medium" refers to a medium that participates in providing instructions to processor for execution, including without limitation, non-volatile media (e.g., optical or magnetic disks), volatile media (e.g., memory) and transmission media. Transmission media includes, without limitation, coaxial cables, copper wire and fiber optics.

Computer-readable medium can further include operating system (e.g., a Linux^{®} operating system), network communication module, audio interface manager, audio processing manager and live content distributor. Operating system can be multi-user, multiprocessing, multitasking, multithreading, real time, etc. Operating system performs basic tasks, including but not limited to: recognizing input from and providing output to network interfaces and/or devices; keeping track and managing files and directories on computer-readable mediums (e.g., memory or a storage device); controlling peripheral devices; and managing traffic on the one or more communication channels. Network communications module includes various components for establishing and maintaining network connections (e.g., software for implementing communication protocols, such as TCP/IP, HTTP, etc.).

Architecture can be implemented in a parallel processing or peer-to-peer infrastructure or on a single device with one or more processors. Software can include multiple software components or can be a single body of code.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor or a retina display device for displaying information to the user. The computer can have a touch surface input device (e.g., a touch screen) or a keyboard and a pointing device such as a mouse or a trackball by which the user can provide input to the computer. The computer can have a voice input device for receiving voice commands from the user.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Unless specifically stated otherwise, as apparent from the following discussions, it is appreciated that throughout the present invention discussions utilizing terms such as "processing", "computing", "calculating", "determining", "analyzing" or the like, refer to the action and/or processes of a computer or computing system, or similar electronic computing devices, that manipulate and/or transform data represented as physical, such as electronic, quantities into other data similarly represented as physical quantities.

Reference throughout this invention to "one example embodiment", "some example embodiments" or "an example embodiment" means that a particular feature, structure or characteristic described in connection with the example embodiment is included in at least one example embodiment of the present invention. Thus, appearances of the phrases "in one example embodiment", "in some example embodiments" or "in an example embodiment" in various places throughout this invention are not necessarily all referring to the same example embodiment. Furthermore, the particular features, structures or characteristics may be combined in any suitable manner, as would be apparent to one of ordinary skill in the art from this invention, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the present invention, various features of the present invention are sometimes grouped together in a single example embodiment, Fig., or description thereof for the purpose of streamlining the present invention and aiding in the understanding of one or more of the various inventive aspects. This method of invention, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this invention.

In the description provided herein, numerous specific details are set forth. However, it is understood that example embodiments of the present invention may be practiced without these specific details. In other instances, well-known methods, structures and techniques have not been shown in detail in order not to obscure an understanding of this description.

Thus, while there has been described what are believed to be the best modes of the present invention, those skilled in the art will recognize that other and further modifications may be made thereto without departing from the scope of the present invention as defined by the claims.

For example, any formulas given above are merely representative of procedures that may be used. Functionality may be added or deleted from the block diagrams and operations may be interchanged among functional blocks. Steps may be added or deleted to methods described within the scope of the present disclosure.

## Claims

1. A method of estimating early reflection trajectories of an audio source in a three-dimensional audio scene, the method comprising:
obtaining (S201) a voxel-based representation of the three-dimensional audio scene, information on a listener location of a listener in the three-dimensional audio scene, and information on an audio source location of the audio source in the three-dimensional audio scene;
applying (S202) a ray direction pattern to one or more points on a connecting line between the audio source location and the listener location to obtain, for each of the one or more points, a plurality of rays originating at the respective point, wherein the one or more points are determined based on an obtained cardinality of the one or more points;
determining (S203) a set of collision voxels based on the plurality of rays and the voxel-based representation of the three-dimensional audio scene;
determining (S204) early reflection trajectories based on the set of collision voxels, the listener location, the audio source location and a geometrical validity test; and
outputting the early reflection trajectories for rendering of the three-dimensional audio scene.

2. The method of claim 1, wherein coordinates of the one or more points on the line connecting the audio source location and the listener location are determined based on the cardinality of the one or more points, wherein optionally the one or more points are determined to split the line connecting the audio source location and the listener location into N-1 equal segments where N is the cardinality of the one or more points and is larger than or equal to 2.

3. The method of any one of claims 1 to 2, wherein the cardinality of the one or more points depends on a scene type of the three-dimensional audio scene, available computational resources, an encoder preset, or a combination thereof, wherein optionally the scene type comprises an indoor scene and an outdoor scene.

4. The method of any one of claims 1 to 3, wherein each collision voxel in the set of collision voxels is an occluder voxel in the voxel-based representation of the three-dimensional audio scene.

5. The method of claim 4, wherein the occluder voxel represents an acoustically reflective surface, and/or wherein the occluder voxel represents any material in the voxel-based representation of the three-dimensional audio scene other than air.

6. The method of any one of claims 1 to 5, wherein determining (S204) early reflection trajectories based on the set of collision voxels, the listener location, the audio source location and a geometrical validity test comprises:
for each collision voxel in the set of collision voxels, determining (S401) whether the collision voxel can produce a geometrically valid representation of a first-order reflection; and
if the collision voxel can produce a geometrically valid representation of a first-order reflection, determining (S402) a path connecting the listener location and the audio source location via the respective collision voxel as an early reflection trajectory.

7. The method of any one of claims 1 to 6, wherein determining (S204) early reflection trajectories based on the set of collision voxels, the listener location, the audio source location and a geometrical validity test comprises:
for each collision voxel in the set of collision voxels, determining (S501) a path connecting the listener location and the audio source location via the respective collision voxel; and
for each path, determining (S502) the path as an early reflection trajectory if the path is geometrically valid.

8. The method of any one of claims 1 to 7, wherein the method is performed by a decoder or renderer.

9. An apparatus, comprising a processor and a memory coupled to the processor, wherein the processor is adapted to carry out the method according to any one of claims 1 to 8.

10. A program comprising instructions that, when executed by a processor, cause the processor to carry out the method according to any one of claims 1 to 8.

11. A computer-readable storage medium storing the program according to claim 10.

## Patentansprüche

1. Verfahren zum Schätzen früher Reflexionstrajektorien einer Audioquelle in einer dreidimensionalen Audioszene, wobei das Verfahren umfasst:
Erhalten (S201) einer voxelbasierten Darstellung der dreidimensionalen Audioszene, von Informationen über einen Zuhörerstandort eines Zuhörers in der dreidimensionalen Audioszene und Informationen über einen Audioquellenstandort der Audioquelle in der dreidimensionalen Audioszene;
Anwenden (S202) eines Strahlenrichtungsmusters auf einen oder mehrere Punkte auf einer Verbindungslinie zwischen dem Audioquellenstandort und dem Zuhörerstandort, um für jeden des einen oder der mehreren Punkte eine Vielzahl von Strahlen zu erhalten, die von dem jeweiligen Punkt ausgehen, wobei der eine oder die mehreren Punkte basierend auf einer erhaltenen Kardinalität des einen oder der mehreren Punkte bestimmt werden;
Bestimmen (S203) einer Menge von Kollisionsvoxeln basierend auf der Vielzahl von Strahlen und der voxelbasierten Darstellung der dreidimensionalen Audioszene;
Bestimmen (S204) von frühen Reflexionstrajektorien basierend auf der Menge von Kollisionsvoxeln, dem Zuhörerstandort, dem Audioquellenstandort und einer geometrischen Gültigkeitsprüfung; und
Ausgeben der frühen Reflexionstrajektorien zum Wiedergeben der dreidimensionalen Audioszene.

2. Verfahren nach Anspruch 1, wobei Koordinaten des einen oder der mehreren Punkte auf der Verbindungslinie, die den Audioquellenstandort und den Zuhörerstandort verbindet, basierend auf der Kardinalität des einen oder der mehreren Punkte bestimmt werden, wobei optional der eine oder die mehreren Punkte so bestimmt werden, dass die Verbindungslinie, die den Audioquellenstandort und den Zuhörerstandort verbindet, in N-1 gleiche Segmente unterteilt wird, wobei N die Kardinalität des einen oder der mehreren Punkte ist und größer oder gleich 2 ist.

3. Verfahren nach einem der Ansprüche 1 bis 2, wobei die Kardinalität des einen oder der mehreren Punkte von einem Szenentyp der dreidimensionalen Audioszene, verfügbaren Rechenressourcen, einer Codierer-Voreinstellung oder einer Kombination davon abhängt, wobei der Szenentyp optional eine Innenraumszene und eine Außenraumszene umfasst.

4. Verfahren nach einem der Ansprüche 1 bis 3, wobei jedes Kollisionsvoxel in der Menge von Kollisionsvoxeln ein Verdeckungs-Voxel in der voxelbasierten Darstellung der dreidimensionalen Audioszene ist.

5. Verfahren nach Anspruch 4, wobei das Verdeckungs-Voxel eine akustisch reflektierende Oberfläche darstellt und/oder wobei das Verdeckungs-Voxel in der voxelbasierten Darstellung der dreidimensionalen Audioszene ein beliebiges Material außer Luft darstellt.

6. Verfahren nach einem der Ansprüche 1 bis 5, wobei Bestimmen (S204) von frühen Reflexionstrajektorien basierend auf der Menge von Kollisionsvoxeln, dem Zuhörerstandort, dem Audioquellenstandort und einer geometrischen Gültigkeitsprüfung umfasst:
für jedes Kollisionsvoxel in der Menge der Kollisionsvoxel, Bestimmen (S401), ob das Kollisionsvoxel eine geometrisch gültige Darstellung einer Reflexion erster Ordnung erzeugen kann; und
falls das Kollisionsvoxel eine geometrisch gültige Darstellung einer Reflexion erster Ordnung erzeugen kann, Bestimmen (S402) eines Pfads, der den Zuhörerstandort und den Audioquellenstandort über das jeweilige Kollisionsvoxel als frühe Reflexionstrajektorie verbindet.

7. Verfahren nach einem der Ansprüche 1 bis 6, wobei Bestimmen (S204) von frühen Reflexionstrajektorien basierend auf der Menge von Kollisionsvoxeln, dem Zuhörerstandort, dem Audioquellenstandort und einer geometrischen Gültigkeitsprüfung umfasst:
für jedes Kollisionsvoxel in der Menge der Kollisionsvoxel, Bestimmen (S501) eines Pfads, der den Zuhörerstandort und den Audioquellenstandort über das jeweilige Kollisionsvoxel verbindet; und
für jeden Pfad, Bestimmen (S502) des Pfads als frühe Reflexionstrajektorie, falls der Pfad geometrisch gültig ist.

8. Verfahren nach einem der Ansprüche 1 bis 7, wobei das Verfahren von einem Decoder oder Renderer ausgeführt wird.

9. Einrichtung, die einen Prozessor und einen Speicher umfasst, der an den Prozessor gekoppelt ist, wobei der Prozessor dazu angepasst ist, das Verfahren nach einem der Ansprüche 1 bis 8 durchzuführen.

10. Programm, das Anweisungen umfasst, die, wenn sie von einem Prozessor ausgeführt werden, den Prozessor veranlassen, das Verfahren nach einem der Ansprüche 1 bis 8 durchzuführen.

11. Computerlesbares Speichermedium, das das Programm nach Anspruch 10 speichert.

## Revendications

1. Procédé d'estimation de trajectoires de réflexion précoce d'une source audio dans une scène audio tridimensionnelle, le procédé comprenant :
l'obtention (S201) d'une représentation basée sur les voxels de la scène audio tridimensionnelle, d'informations sur un emplacement d'auditeur d'un auditeur dans la scène audio tridimensionnelle et d'informations sur un emplacement de source audio de la source audio dans la scène audio tridimensionnelle ;
l'application (S202) un modèle de direction de rayon à un ou plusieurs points sur une ligne reliant l'emplacement de source audio et l'emplacement d'auditeur pour obtenir, pour chacun des un ou plusieurs points, une pluralité de rayons provenant du point respectif, dans lequel les un ou plusieurs points sont déterminés sur la base d'une cardinalité obtenue des un ou plusieurs points ;
la détermination (S203) d'un ensemble de voxels de collision sur la base de la pluralité de rayons et la représentation à base de voxels de la scène audio tridimensionnelle ;
la détermination (S204) de trajectoires de réflexion précoce sur la base de l'ensemble des voxels de collision, de l'emplacement d'auditeur, de l'emplacement de source audio et d'un test de validité géométrique ; et
la génération des trajectoires de réflexion précoce pour le rendu de la scène audio tridimensionnelle.

2. Procédé selon la revendication 1, dans lequel des coordonnées des un ou plusieurs points sur la ligne reliant l'emplacement de source audio et l'emplacement d'auditeur sont déterminées sur la base de la cardinalité des un ou plusieurs points, dans lequel, facultativement, les un ou plusieurs points sont déterminés pour diviser la ligne reliant l'emplacement de source audio et l'emplacement d'auditeur en N-1 segments égaux où N est la cardinalité des un ou plusieurs points et est supérieur ou égal à 2.

3. Procédé selon l'une quelconque des revendications 1 à 2, dans lequel la cardinalité des un ou plusieurs points dépend d'un type de scène de la scène audio tridimensionnelle, de ressources de calcul disponibles, d'un préréglage d'encodeur ou d'une combinaison de ceux-ci, dans lequel, facultativement, le type de scène comprend une scène intérieure et une scène extérieure.

4. Procédé selon l'une quelconque des revendications 1 à 3, dans lequel chaque voxel de collision dans l'ensemble de voxels de collision est un voxel d'occlusion dans la représentation à base de voxels de la scène audio tridimensionnelle.

5. Procédé selon la revendication 4, dans lequel le voxel d'occlusion représente une surface acoustiquement réfléchissante et/ou dans lequel le voxel d'occlusion représente un quelconque matériau autre que l'air dans la représentation à base de voxels de la scène audio tridimensionnelle.

6. Procédé selon l'une quelconque des revendications 1 à 5, dans lequel la détermination (S204) de trajectoires de réflexion précoce sur la base de l'ensemble de voxels de collision, de l'emplacement d'auditeur, de l'emplacement de source audio et d'un test de validité géométrique comprend :
pour chaque voxel de collision dans l'ensemble des voxels de collision, le fait de déterminer (S401) si le voxel de collision peut produire une représentation géométriquement valide d'une réflexion du premier ordre ; et
si le voxel de collision peut produire une représentation géométriquement valide d'une réflexion de premier ordre, la détermination (S402) d'un chemin reliant l'emplacement d'auditeur et l'emplacement de source audio via le voxel de collision respectif comme une trajectoire de réflexion précoce.

7. Procédé selon l'une quelconque des revendications 1 à 6, dans lequel la détermination (S204) de trajectoires de réflexion précoce sur la base de l'ensemble des voxels de collision, de l'emplacement d'auditeur, de l'emplacement de source audio et d'un test de validité géométrique comprend :
pour chaque voxel de collision dans l'ensemble de voxels de collision, la détermination (S501) d'un chemin reliant l'emplacement d'auditeur et l'emplacement de source audio via le voxel de collision respectif ; et
pour chaque chemin, la détermination (S502) du chemin comme une trajectoire de réflexion précoce si le chemin est géométriquement valide.

8. Procédé selon l'une quelconque des revendications 1 à 7, dans lequel le procédé est exécuté par un décodeur ou un moteur de rendu.

9. Appareil comprenant un processeur et une mémoire couplée au processeur, dans lequel le processeur est adapté pour mettre en œuvre le procédé selon l'une quelconque des revendications 1 à 8.

10. Programme comprenant des instructions qui, lorsqu'elles sont exécutées par un processeur, amènent le processeur à mettre en œuvre le procédé selon l'une quelconque des revendications 1 à 8.

11. Support de stockage lisible par ordinateur stockant le programme selon la revendication 10.
